Europäisches Patentamt

European Patent Office

Office européen des brevets

(11) Publication number: **0 091 825**
**A1**

(12) **EUROPEAN PATENT APPLICATION**

(21) Application number: **83302055.5**

(22) Date of filing: **13.04.83**

(51) Int. Cl.³: **A 23 G 9/04**
**A 23 G 9/12, A 47 J 43/046**
**A 47 J 43/06**

(30) Priority: **16.04.82 GB 8211148**

(43) Date of publication of application:
**19.10.83 Bulletin 83/42**

(84) Designated Contracting States:
**AT BE CH DE FR GB IT LI NL SE**

(71) Applicant: **THORN EMI Domestic Appliances Limited**
**THORN EMI House Upper Saint Martin's Lane**
**London, WC2H 9ED(GB)**

(72) Inventor: **Lapham, Michael John**
**15, Almond Close Bedhampton**
**Havant Hampshire(GB)**

(74) Representative: **Marsh, Robin Geoffrey et al,**
**Thorn EMI Patents Limited The Quadrangle Westmount**
**Centre Uxbridge Road**
**Hayes Middlesex, UB4 0HB(GB)**

(54) Improvements in or relating to the preparation of foodstuffs or beverages for consumption.

(57) A tool (6) is described which includes upper (8) and lower (9) components, mounted on a common shaft (7), rotatable by the motor of a food mixer or food processor, and contained within a housing (2), the tool's upper and lower components being capable of performing respective, separate operations upon foodstuffs, beverages or ingredients therefor introduced into the housing adjacent the upper component. Typically the tool is constructed to operate upon pre-frozen portions of soft-ice cream mixture to render the soft-ice consumable. The housing may be constructed of, or may include, thermally insulating material to enable the soft-ice to be kept ready for serving over an extended time.

FIG.1

EP 0 091 825 A1

## IMPROVEMENTS IN OR RELATING TO THE PREPARATION OF FOODSTUFFS OR BEVERAGES FOR CONSUMPTION

The present invention relates to the preparation of foodstuffs or beverages for consumption, and it is especially, though by no means exclusively, useful in the preparation of a foodstuff known as soft-ice or soft-ice-cream as it may be called. This particular foodstuff is prepared from a mixture of water and a granular or powdered soft-ice material and the technique of its preparation involves the mixture being pre-frozen. When required for consumption, the pre-frozen mixture is treated so as to produce the soft-ice as required with a consistency similar to that of whipped cream.

This invention aims to provide apparatus for use in the preparation of foodstuffs or beverages and has the object of providing any of the following:-

(a)  a tool arranged to be power driven for rotation within a suitable housing; the tool including first and second components mounted upon a common, rotatable shaft, for performing respective, different operations upon a foodstuff, a beverage, or ingredients therefor;

(b)  a food mixer or a food processor, incorporating the tool and having a housing associated thereweith in which said tool can rotate;

(c)   a food mixer or a food processor having a multi-speed drive, and incoporating the tool and having a housing, associated therewith, in which said tool can rotate;

(d)   a food mixer or a food processor having associated therewith a thermally insulated housing in which the tool can rotate and which is constructed to keep the beverage or foodstuff at a desired serving temperature, either by virtue of its construction alone or by virtue of its being constructed to accept a cooling or heating agent or element.

In order that the invention may be clearly understood and readily carried into effect, some embodiments thereof will now be described, by way of example only, with reference to the accompanying drawings, of which:-

Figure 1 shows, in side elevation, a tool in accordance with one example of this invention, together with a sectional showing of a housing for the tool and an outline showing of a food processor with which the tool can be used,

Figure 2 shows, in plan view, part of the tool shown in Figure 1,

Figure 3 shows, in cross-sectional view, a food processor which can accept the tool of Figures 1 and 2,

Figure 4 shows, in perspective view, an alternative form of tool to that shown in Figures 1 and 2,

Figure 5 shows, in side elevation, one component of another alternative form of tool, and

Figure 6 shows, in end elevation, the tool of Figure 5.

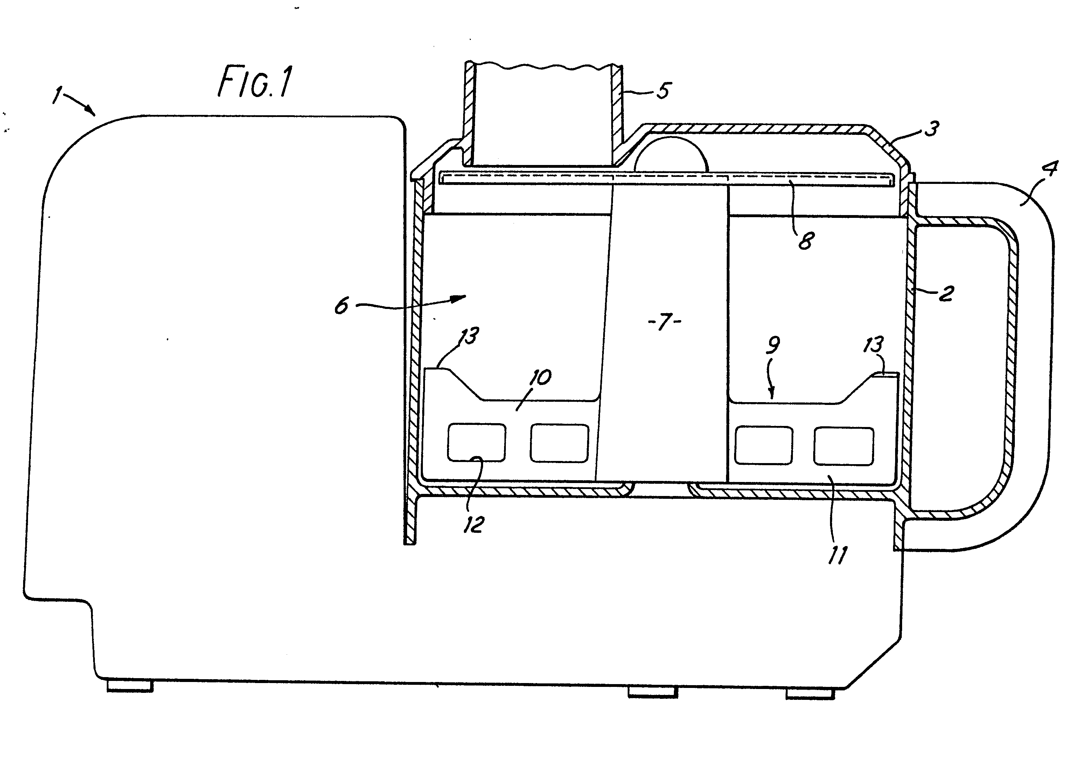

Referring now to Figure 1, a food processor is shown in general outline at 1 and a housing 2, in which the processing is to be carried out, and a lid 3 therefor are shown in cross-section. Conveniently, the housing (sometimes referred to as a bowl) is formed with a handle 4 and the lid 3 is formed with a feed tube 5.

In the particular food processor shown, the housing 2 is releasably secured, by interlocking parts in conventional manner, to the processor itself and the lid 3 is secured to the housing 2 by means of interlocking parts engaged by rotational movement of the lid relative to the housing. The lid contains a prong (not shown) which operates electrical switches that, in turn, control the motor drive circuits. The arrangement is such that, if a user attempts to remove the lid whilst the processor is still operating, the act of rotating the lid relative to the housing, which is the first step necessary for such removal, causes the aforementioned prong to change the switch conditions and apply regenerative braking to the drive motor. This form of braking is effective to stop the motor quite suddenly, and certainly well before it would be possible for the user to remove the lid completely and insert a hand into the housing.

The tool, which is rotated from beneath, as is conventional in food processors, is shown generally at 6 and it can be seen that it comprises a shaft 7 which supports first (8) and second (9) components for performing respective and different operations on foodstuffs, beverages or ingredients therefor. Such a tool may be considered as a "double acting" tool. In this example, the object is to make soft-ice or soft-ice cream, as it may be called, and the arrangement is such that pre-frozen soft-ice mix, either in the form of chunks or in a pre-moulded shape to fit the feed-tube 5, is pushed in through the feed-tube using a manually operable pusher device of any convenient form, while the tool 6 is being rotated within the housing 2 so that the frozen soft-ice mix is forced into contact with the first, or upper, component 8. The component 8 can take any convenient form, and may be constructed so as to achieve grating, shredding, slicing, chopping, abrasion or any combination of these functions; the object of this component being to break up the pre-frozen soft-ice mix into pieces of manageable size for the operation to be performed by the second (or lower) component 9.

The second component 9 takes, in this example, the form shown in Figures 1 and 2. It is of moulded plastics construction and may be formed integrally with the shaft 7 and incorporates a pair of blades 10, 11 which are formed with apertures, such as that shown at 12 through which the pre-frozen soft-ice mix, broken up by the component 8, is forced.

The outer edges of the blades 10, 11 are formed with upwardly extending projections and lie closely parallel to the inside wall of the housing 2 and the upper ends, such as 13, of these projections are angled over, as best seen in Figure 2, to tend to force the soft-ice mix downwards, thus concentrating the mix at and adjacent the bottom of the housing 2. The second, or lower, component 9 need not take the form shown, but can take any convenient form, bearing in mind that it is required to perform the following functions:

(a) to reduce the broken up, pre-frozen soft-ice mix to the desired homogeneous consistency;

(b) to whisk or whip the mixture and

(c) to raise the temperature of the soft-ice from its freezing/storage temperature of (typically) $-18^{o}C$ to a serving temperature of (typically) between $-6^{o}C$ and $-10^{o}C$.

The first (or upper) component 8 may assist in this latter function.

It has been found advantageous to utilise a food processor having more than one speed of operation and to operate the processor at a relatively low speed (e.g. 450 rpm) at first, when the primary function is the fragmentary action of the first component 8, as this reduces noise and vibration, and to operate the processor at a relatively high speed (e.g. 1000 rpm or 1550 rpm), when the primary function is that of the second component 9, to improve efficiency of whisking, etc. It is also convenient if the food processor is provided with a "pulse" button which allows brief, intermittent actuation of the tool, as the consistency of the finished soft-ice can depend quite critically upon the amount of whisking or whipping done by means of the second component 9, and it is convenient to be able to operate the processor in short bursts once the consistency is almost correct.

Thus, it will be appreciated that the tool 6 is effective, by way of separate components, carried on a common shaft, to first fragment and then whisk the pre-frozen soft-ice mix. It will also be appreciated that the tool, or other "double acting" tools of alternative designs, can be used for foodstuffs and beverages other than soft-ice. For example, soups and slush-ice drinks can be conveniently produced by means of a food processor equipped with such a tool.

It may be desired to keep the foodstuff or beverage cold or warm, as appropriate, for some time after it has been prepared. In the case of soft-ice, for example, it may be desired to store soft-ice, ready to eat, in a refrigerator. In such circumstances, it is advantageous if the bowl or housing 2 is formed of thermally insulating material and/or is formed with walls that can accommodate freezer elements or bags of freezer material so as to avoid the risk that the temperature of the ready-to-eat soft-ice will rise to an unacceptable extent while so stored. Similar comments apply, mutatis mutandis, to situations in which it is desired to keep a finished foodstuff or beverage hot or warm.

In the case of a tool for making soft-ice, it is usual for the first component 8 to be made of metal and secured to the common shaft 7 by means of a cap forced on or otherwise secured (e.g. glued, ultrasonically welded or rivetted) to the shaft. The second component 9, as aforementioned, may be made of plastics material and may be formed integrally with the shaft 7.

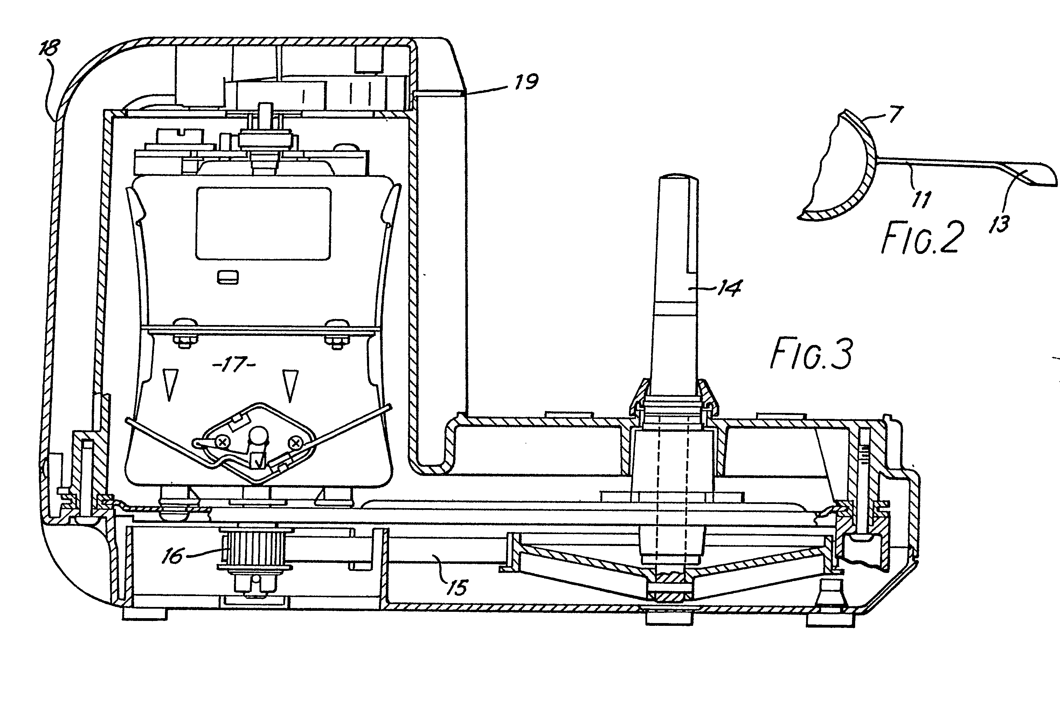

Figure 3 shows, in cross-sectional view, a food processor which can conveniently accommodate tools of the kind thus far described.

The main drive shaft is shown at 14; this being driven from below by means of a toothed belt 15 which, in turn, is driven by means of a toothed drive wheel 16 rotated by a motor 17. The motor 17 is surrounded by a casing 18 which is slotted, as shown at 19, to accommodate the aforementioned prong on the lid of the bowl or housing in which the food stuff or beverage is to be prepared. The upper part of the casing 18 contains micro-switches (not shown in detail) operable by the prong to control the operation of the motor. The motor has three drive speeds (450, 1000 and 1550 rpm) and a pulse facility which operates on the lower speed drive to enable the tool to be operated intermittently.

The arrangements described hereinbefore have included, or been designed for use with, a food processor. This, however, is not essential and it is within the scope of the invention to make use of a food mixer instead of a food processor as the basis of, and incoporating the prime mover of, the arrangement.

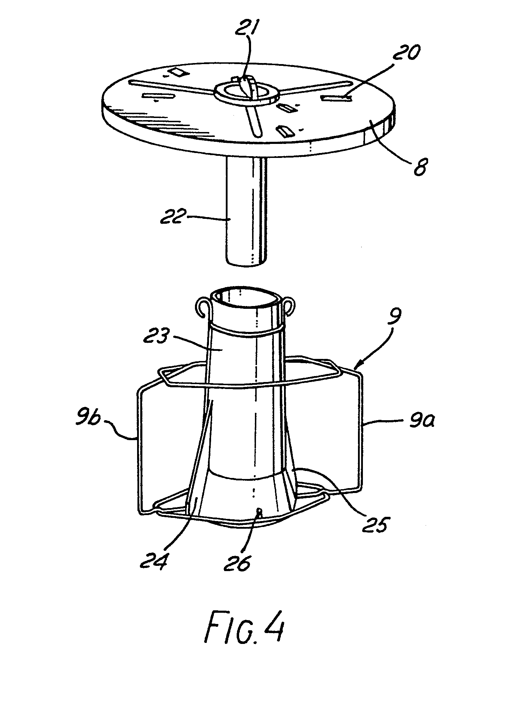

Figure 4 shows a detailed, perspective view of an alternative construction for the tool shown at 6 in Figure 1. The upper component 8 is constructed in the form of a cutting disc and has apertures, such as at 20, formed therein for providing the grating, shredding, slicing or chopping action of the foodstuff and through which the consequently formed fragments thereof pass into the bowl 2. The cutting disc 8 also has an upstanding portion 21 at the centre thereof, so that the disc 8 may be easily lifted off of the shaft (not shown) over which a cylindrical boss 22 of the disc 8 is placed.

The lower component 9 consists in this example of any suitable configuration of wires, sufficiently robust for providing a whisking and/or whipping action, and the component 9 is supported on a cylindrically-shaped supporting member 23, which is also fitted over the shaft (not shown) and into the top end of which cylindrical portion 22 is inserted.

In the preferred configuration of the component 9, a first generally vertical wire 9a is arranged to be disposed closely adjacent to the side wall of the bowl 2 and a second generally vertical wire 9b is arranged to be disposed further within the bowl 2 towards the centre thereof, so that, by rotation of the component 9, whisking and/or whipping of the foodstuff is provided in substantially all regions of the interior of the bowl 2.

The supporting member 23 is provided with integrally-formed protruding portions, 24 and 25, positioned on opposing sides of member 23, as well as relatively smaller protruding portions, one shown at 26, for securing the component 9 to supporting member 23, so that rotation of member 23 causes rotation of wires 9a and 9b.

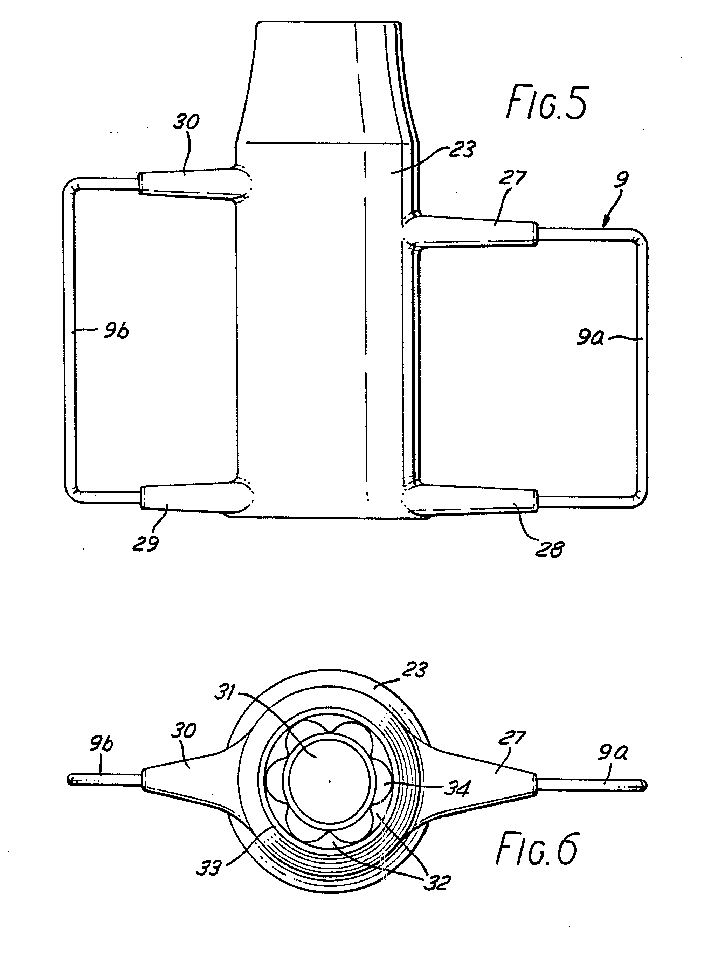

Figure 5 shows another alternative embodiment of the component 9, wherein the supporting member 23 is provided with integrally-formed extending sleeves 27, 28, 29 and 30, which encase the ends of wires 9a and 9b, so as to retain the wires securely in their correct positions.

Figure 6 is a plan view of the component 9 in Figure 5 showing the top of sleeves 27 and 30, which encase the upper ends of the wires 9a and 9b, respectively. The cylindrical supporting member 23 has a bore 31 into which cylindrical portion 22 of the upper component 8, shown in Figure 4, is inserted.

A number of equally-spaced protuberances, two adjacent protuberances being shown at 32, are circumferentially disposed around inner edge 33 of the top of the supporting member 23 and integrally formed therewith. A flange 34, also integrally formed, is provided below the protuberances.

A similar arrangement of protuberances (not shown) may be provided around the upper end of cylindrical portion 22, so that, on insertion of portion 22 into bore 31 of the supporting member 23, the protuberances on portion 22 slot into spaces between the protuberances on member 23 and rest on the flange 34. This therefore provides a simple locking arrangement to ensure that the subsequent rotation of the supporting member 23 causes rotation of the disc 8.

An arrangement of this kind may, of course, also be provided in the upper part of the supporting member 23 shown in Figure 4.

RGM/smb

What we claim is:

1. A tool (6) for use in the preparation of foodstuffs or beverages for consumption and arranged to be power driven for rotation within a housing (2), characterised in that the tool includes first (8) and second (9) components mounted for co-operative rotation about a common axis, said components performing respective, different operations upon a foodstuff, a beverage or ingredients therefor.

2. A tool according to Claim 1 characterised in that said components (8, 9) are spaced apart along said axis, that the axis is arranged to be substantially vertical, and that the upper (8) of said first and second components is generally discoidal in shape and formed to operate upon said foodstuff, beverage or ingredients to effect grating, shredding, slicing, chopping or abrasion thereof.

3. A tool according to Claim 2 characterised in that the lower component (9) is formed with blade members (10, 11) arranged to whisk or whip the material, already operated upon by said upper component (8).

4. A tool according to either of Claims 2 or 3 characterised in that the two components (8, 9) are secured to a common shaft (7) extending along said axis and including drive means (14) to receive a rotational drive connection from a motor.

5. A food mixer or food processor characterised by including a tool (6) according to Claim 4 and a motor (17) arranged to rotate said shaft (7) by way of said drive means (14).

6. A mixer or processor according to Claim 5 characterised in that said motor is capable of operation at a plurality of different speeds.

7. A mixer or processor according to either of Claims 5 or 6 characterised in that said motor is energisable for pulsed operation.

8. A mixer or processor according to any of Claims 5-7 characterised by including a housing (2) arranged to surround said tool (6) and including a removeable cover part (3) formed with a device capable of actuating a safety cut-out to de-energise said motor (17) when the cover part is removed.

9. A mixer or processor according to Claim 8 characterised in that said housing (2) is formed of, or includes, thermally insulative material.

10. A mixer or processor according to any of Claims 5-9 characterised by being constructed and adapted to operate upon pre-frozen portions of soft-ice mixture to produce soft-ice cream.

FIG.1

FIG.2

FIG.3

FIG.4

0091825

FIG.5

30
23
27
9
9b
9a
29
28

31
23
9b
30
27
9a
34
33
32

FIG.6

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-1 415 679  (W.M. MURPHY) <br> * Page 1, lines 10-12; figure 2 * | 1,4,5 | A 23 G    9/04 <br> A 23 G    9/12 <br> A 47 J   43/046 <br> A 47 J   43/06 |
| | --- | | |
| X | US-A-4 199 112  (J.O. McLEAN) <br> * Figures 1,2; claims 1-12; column 2, lines 38-68; column 3, lines 1-11 * | 1-8 | |
| | --- | | |
| X | FR-A-1 082 587  (R. BOSCH) <br> * Page 1; page 2, column 1, paragraph 2; abstract; figures 1,2 * | 1-5 | |
| | --- | | |
| X | DE-B-1 052 079  (P. FRANKEN) <br> * Figures 2-5,8; claim 1 * | 1 | |
| | --- | | |
| Y | US-A-3 552 663  (J. ROYALS) <br> * Figure 1; claim 1 * | 9,10 | TECHNICAL FIELDS SEARCHED (Int. Cl. ³) |
| | --- | | |
| X | DE-C- 632 005  (A. SELIGMANN) <br> * Figure 1; page 1 * | 1-6,10 | A 23 G <br> A 47 J |
| Y | | 9 | |
| | --- | | |
| Y | US-A-3 403 031  (A.B. HOLMES) <br> * Column 2, lines 21-34 * | 1,10 | |
| | --- | | |
| Y | DE-A-2 225 518  (PROSENBAUER & CO.) <br> * Figure 5; claim 1 * | 1,9,10 | |
| | ---                    -/- | | |

The present search report has been drawn up for all claims

| Place of search THE HAGUE | Date of completion of the search 05-07-1983 | Examiner GUYON R.H. |
|---|---|---|

## DOCUMENTS CONSIDERED TO BE RELEVANT

Page  2

| Category | Citation of document with indication, where appropriate, of relevant passages | Relevant to claim | CLASSIFICATION OF THE APPLICATION (Int. Cl. ³) |
|---|---|---|---|
| A | US-A-2 863 776  (V.E. LISHER) | | |
| A | FR-A-  718 289  (SCHULTE & CIE.) | | |
| A | DE-C-  602 951  (K. LOSER) | | |
| A | FR-A-2 166 570  (ETUD) | | |
| A | DE-B-1 114 619  (R. BOSCH) | | |
| A | FR-A-2 172 081  (SUNBEAM CORP.) | | TECHNICAL FIELDS SEARCHED (Int. Cl. ³) |
| A | FR-A-1 175 583  (R. DUPONT et al.) | | |
| A | US-A-3 313 332  (S. STEPHAN et al.) | | |

The present search report has been drawn up for all claims

| Place of search THE HAGUE | Date of completion of the search 05-07-1983 | Examiner GUYON R.H. |
|---|---|---|